# EUROPÄISCHE PATENTSCHRIFT

(11) **EP 1 365 847 B1**
(45) Veröffentlichungstag und Bekanntmachung des Hinweises auf die Patenterteilung: **16.06.2004**
(21) Anmeldenummer: 02719961.1
(22) Anmeldetag: 28.02.2002
(51) Int. Cl.: A63H 27/04

(54) **KUPPLUNG**
COUPLING
EMBRAYAGE

(30) Priorität: 06.03.2001 DE 10110659; 16.05.2001 DE 10125733
(43) Veröffentlichungstag der Anmeldung: 03.12.2003
(73) Patentinhaber: Vogel, Heribert, 71711 Steinheim (DE)
(72) Erfinder: Vogel, Heribert, 71711 Steinheim (DE)
(74) Vertreter: Schurack, Eduard F.
(86) Internationale Anmeldenummer: PCT/EP2002/002155
(87) Internationale Veröffentlichungsnummer: WO 2002/070098

(56) Entgegenhaltungen:
- WO-A-96/06005
- US-A- 2 688 206
- US-A- 4 257 147

## Beschreibung

Die vorliegende Erfindung betrifft eine Kupplung, zur Verbindung eines Rotors eines Ultraleichtmodellhelikopters mit einem Antriebsmotor, mit einem ersten Antriebselement, das von dem Antriebsmotor in Rotation versetzt werden kann, und mit zumindest einer Abtriebswelle, auf die ein von dem Antriebsmotor geliefertes Antriebsmoment zumindest teilweise übertragen werden kann.

### Stand der Technik

Beispielsweise im Zusammenhang mit Modellhelikoptern ist es bekannt, den Auftrieb sowie Nick-/Roll des Hauptrotors über ein komplexes Gestänge zu steuern, das an Servomotoren angeschlossen ist. Zum Antrieb des Heckrotors sind insbesondere zwei Lösungen üblich. Bei der ersten Lösung erfolgt die Verbindung des Heckrotors mit dem Hauptantrieb über ein Getriebe, das durch einen Servomotor gesteuert wird, eine optionale Kupplung und eine Abtriebswelle. Bei der zweiten Lösung wird der Heckrotor von einem separaten Motor angetrieben. Die erste Lösung wird üblicherweise herangezogen, wenn ein Verbrennungsmotor als Hauptantrieb verwendet wird. Ein zweiter, nur für den Antrieb des Heckrotors vorgesehener Verbrennungsmotor wäre, insbesondere im Bereich des Heckrotors, zu schwer. Ein Elektromotor benötigt einen aufwendigen Generator oder schwere Akkus. Die zweite Lösung wird insbesondere bei elektrisch angetriebenen Modellen eingesetzt, weil als Antrieb für den Heckrotor aufgrund der geringen benötigten Leistung derzeit ausschließlich Elektromotoren verwendet werden können. Ferner ist es bekannt, das Gyro-System, das zur Stabilisierung um die Hauptrotorwelle den Heckrotorschub regelt (beziehungsweise weitere Raumachsen wie beispielsweise Nick oder Roll), als ein separates System in einem eigenen Gehäuse vorzusehen, das an das Gesamtsystem angeschlossen werden kann.

Die beschriebenen konstruktiven Ausführungen haben zur Folge, dass herkömmliche Konstruktionen relativ schwergewichtig sind, weil sie neben den genannten konstruktiven Merkmalen besonders hinsichtlich Steifheit und Festigkeit dahingehend optimiert sind, einen eventuellen Absturz zu überstehen ohne größeren Schaden zu nehmen. Jedes Mehrgewicht benötigt wiederum stärkere und dadurch notwendigerweise schwerere Motoren und deren Energieversorgung, wie zum Beispiel Akkus. Dies führt dazu dass bisher beispielsweise kein kommerzielles Angebot von Modellhelikoptern mit einem Gewicht < 200 Gramm existiert. Die Helikopter, die diese Grenze erreichen, basieren noch auf herkömmlicher Technologie und werden oft als sogenannte Indoor-Helikopter angeboten. Die Erfahrung zeigt jedoch, dass vor allem Fluganfänger Probleme haben, das Modell in Zimmerräumen erfolgreich zu steuern, daher sind mit Indoor eher Hallenräume gemeint. Bei Abstürzen nimmt das Modell trotz robuster Bauweise oftmals Schaden. Grund hierfür ist das immer noch recht hohe Gewicht und die damit verbundenen Trägheitskräfte des Modellhelikopters. Um den Auftrieb des Hauptrotors variabel zu steuern (Pitch, Nick und Roll), wird in herkömmlichen Hauptrotorsteuerungen eine variable Steuerung des Anstellwinkels der Rotorblätter über Servomotoren, Taumelscheibe, Hillerpaddel und so weiter erreicht. Es sind zwar einzelne Prototypen von Modellhelikoptern bekannt, die bis zu 40-50 Gramm leicht sind, jedoch basieren auch diese Prototypen auf der herkömmlichen Technologie, sind entsprechend aufwendig herzustellen und sind daher für eine Serienfertigung ungeeignet.

Der vorliegenden Erfindung liegt die Aufgabe zugrunde, eine gattungsgemäße Kupplung dahingehend weiterzubilden, dass sie in Leichtbauweise und kostengünstig herstellbar ist und eine exakte Einstellung beziehungsweise Regelung des übertragenen Moments ermöglicht.

### Vorteile der Erfindung

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Die erfindungsgemäße Kupplung baut auf dem gattungsgemäßen Stand der Technik dadurch auf, dass eine Momentenübertragung auf die zumindest eine Abtriebswelle über ein Laufrad erfolgt, dass eine Stellvorrichtung auf das Laufrad eine variierbare Kraft ausübt, um das Laufrad gegebenenfalls gegen das erste Antriebselement zu drücken, und dass die Kraft über ein Magnetfeld variiert wird, das durch die elektrische Ansteuerung von zumindest einer Spule beeinflussbar ist, die Bestandteil der Stellvorrichtung ist.

Beispielsweise im Zusammenhang mit einem Ultraleichtmodellhelikopter ermöglicht es die erfindungsgemäße Lösung, dass der Hauptrotor und der Heckrotor mit nur einem Antriebsmotor, insbesondere einem Elektromotor, angetrieben werden, wobei die Drehzahl des Heckrotors über die Einstellung der durch die erfindungsgemäße Kupplung übertragene Momente variiert werden kann, indem die zumindest eine Spule in geeigneter Weise angesteuert wird. Die erfindungsgemäße Lösung kann auch bei Fluggeräten eingesetzt werden, die mehrere Hauptrotoren aufweisen. Wenn beispielsweise drei an den Ecken eines Dreiecks vorgesehene Rotoren oder vier an den Ecken eines Vierecks vorgesehene Rotoren vorgesehen sind, ermöglicht es die erfindungsgemäße Kupplung, alle Rotoren mit nur einem zentralen Antriebsmotor anzutreiben. In diesem Fall sind drei beziehungsweise vier Abtriebswellen vorgesehen, denen vorzugsweise jeweils eine jeweilige Stellvorrichtung zugeordnet ist. Durch die erfindungsgemäße Kupplung kann in vielen Fällen auf aufwendige Getriebe verzichtet werden, die beim Stand der Technik dazu erforderlich sind, die Drehzahl der Abtriebswelle unabhängig von der Drehzahl des Antriebselementes zu variieren. Durch die Mehrfachverwendung der Kupplung kann statt mehrerer leistungsschwacher Motoren ein zentraler Motor verwendet werden, was in der Regel zu höherer Effizienz, besserer Ausfallsicherheit, Gewichtsersparnis und geringeren Herstellkosten führt.

Vorzugsweise ist vorgesehen, dass die Stellvorrichtung weiterhin ein magnetisierbares Element aufweist, das in kraftschlüssiger Verbindung mit dem Laufrad steht. Das magnetisierbare Element leistet einen Beitrag zu dem Magnetfeld, über das die Kraft variiert wird, mit der das Laufrad gegen das erste Antriebselement gedrückt wird.

In diesem Zusammenhang ist vorzugsweise vorgesehen, dass das magnetisierbare Element durch einen Permanentmagneten und/oder eine weitere Spule gebildet ist. Bei bevorzugten Ausführungsformen wird nur ein Permanentmagnet verwendet, damit eine elektrische Ansteuerung der weiteren Spule nicht erforderlich ist.

Weiterhin kann vorgesehen sein, dass die kraftschlüssige Verbindung zwischen dem Laufrad und dem magnetisierbaren Element über einen Hebel erfolgt. Über die Wahl der Längen der Hebelarme kann in diesem Fall der Arbeitsweg der Stellvorrichtung und/oder die Größenordnung der auf das Laufrad auszuübenden Kraft an die jeweiligen Gegebenheiten angepasst werden.

Bei bestimmten Ausführungsformen kann es vorteilhaft sein, wenn das Laufrad ohne elektrische Ansteuerung der Spule eine Ruhestellung einnimmt, in der keine Momentenübertragung stattfindet. Es sind jedoch ebenfalls Ausführungsformen denkbar, bei denen das Laufrad ohne elektrische Ansteuerung der Spule derart vorgespannt wird, dass es mit einem geeigneten Druck an dem ersten Antriebselement anliegt.

Insbesondere im vorstehend erläuterten Zusammenhang wird es als besonders vorteilhaft angesehen, wenn die Abtriebswelle elastisch biegbar ist. Diese Ausführungsform ist besonders vorteilhaft, wenn die Stellvorrichtung direkt oder über einen Hebel auf die Abtriebswelle einwirkt.

Insbesondere wenn die Abtriebswelle elastisch biegbar ist, kann weiterhin vorgesehen sein, dass die Abtriebswelle eine Ruhestellung des Laufrades vorgibt. Diese Ruhestellung kann entweder derart gewählt werden, dass kein Moment übertragen wird, oder derart, dass ein gewünschtes Moment übertragen wird.

Eine vorteilhafte Weiterbildung der erfindungsgemäßen Kupplung sieht vor, dass das erste Antriebselement auf einer Welle angeordnet ist, und dass auf der Welle ein zweites Antriebselement angeordnet ist, gegen das das Laufrad ebenfalls mit einer variierbaren Kraft gedrückt werden kann, um die Abtriebswelle mit entgegengesetzter Drehrichtung anzutreiben. Wenn die Abtriebswelle eine elastisch biegbare Abtriebswelle ist, kann bei einer derartigen Ausführungsform beispielsweise vorgesehen sein, dass sich das Laufrad in der Ruhestellung der Abtriebswelle derart zwischen dem ersten Antriebselement und dem zweiten Antriebselement befindet, dass keine Momente übertragen werden.

Weiterhin ist in besonders bevorzugter Weise vorgesehen, dass die Verbindung zwischen Laufrad und einem ersten Antriebselement beziehungsweise einem zweiten Antriebselement reibschlüssig erfolgt.

Insbesondere im Zusammenhang mit einem Ultraleichtmodellhelikopter kann vorgesehen sein, dass die Welle eine Hauptrotorwelle ist, die einen Hauptrotor antreibt. Wie erwähnt können gegebenenfalls auch mehrere Hauptrotoren vorgesehen sein.

Insbesondere im vorstehend erläuterten Zusammenhang ist vorzugsweise weiterhin vorgesehen, dass die Abtriebswelle mit einem Rotor in Verbindung steht.

Im Zusammenhang mit einem Helikopter kann insbesondere vorgesehen sein, dass der Rotor ein Heckrotor ist.

vorzugsweise ist weiterhin vorgesehen, dass die Abtriebswelle im Bereich des Rotors durch ein Lager gelagert ist. Dies ist insbesondere bei Ausführungsformen vorteilhaft, bei denen die Abtriebswelle elastisch biegbar ist und bei denen die Stellvorrichtung auf einen Endabschnitt der Abtriebswelle einwirkt, der dem Rotor gegenüberliegt.

Wie bereits erwähnt, kann die erfindungsgemäße Lösung bei bestimmten Einsatzgebieten vorsehen, dass zumindest eine weitere Abtriebswelle vorgesehen ist, die wie die zumindest eine Antriebswelle angetrieben wird. Diese Ausführungsform ist beispielsweise bei Fluggeräten vorteilhaft, die mehrere (Haupt-) Rotoren aufweisen.

In diesem Zusammenhang ist vorzugsweise weiterhin vorgesehen, dass die Momentenübertragung auf die weitere Abtriebswelle unabhängig von der Momentenübertragung auf die zumindest eine Abtriebswelle variierbar ist. Es sind jedoch ebenfalls Ausführungsformen denkbar, beispielsweise wenn vier Abtriebswellen vorgesehen sind, die jeweils einen Rotor antreiben, bei denen jeweils zwei oder mehr Abtriebswellen gekoppelt sind, beispielsweise indem sie durch eine gemeinsame Stellvorrichtung angelenkt werden.

Weiterhin kann vorgesehen sein, dass das erste Antriebselement und/oder das zweite Antriebselement eine Außenverzahnung aufweist, die in ein auf der Antriebsmotorabtriebswelle angeordnetes Zahnrad eingreift, um das erste Antriebselement und/oder das zweite Antriebselement in Rotation zu versetzen. Es sind jedoch ebenfalls Ausführungsformen denkbar, bei denen ein Riemenantrieb oder ein Reib- beziehungsweise Laufradantrieb oder dergleichen eingesetzt wird.

Bei bevorzugten Ausführungsformen der erfindungsgemäßen Kupplung ist vorgesehen, dass die elektrische Ansteuerung der zumindest einen Spule impulsförmig erfolgt. Dabei kann durch die Polarität der Impulse die Arbeitsrichtung der Stellvorrichtung variiert werden.

Insbesondere in diesem Zusammenhang ist vorzugsweise weiterhin vorgesehen, dass die elektrische Ansteuerung der zumindest einen Spule volldigital erfolgt. Eine volldigitale Ansteuerung ergibt zum einen vielfältige Regelungs- beziehungsweise Steuerungsmöglichkeiten und lässt sich zum anderen kostengünstig verwirklichen.

Insbesondere im Zusammenhang mit einem Helikopter, insbesondere einem Ultraleichtmodellhelikopter, kann vorgesehen sein, dass die elektrische Ansteuerung der zumindest einen Spule in Abhängigkeit von Signalen erfolgt, die von einem Gyro-System geliefert werden. Dies gilt insbesondere, wenn die Abtriebswelle mit einem Heckrotor in Verbindung steht.

Unabhängig vom Einsatzgebiet der erfindungsgemäßen Kupplung kann zusätzlich oder alternativ vorgesehen sein, dass die elektrische Ansteuerung der zumindest einen Spule in Abhängigkeit von der Drehzahl der Antriebswelle und/oder in Abhängigkeit von dem auf die Abtriebswelle übertragenen Moment erfolgt. Die Drehzahl beziehungsweise das Moment werden hierzu vorzugsweise durch geeignete Sensoren erfasst, so dass geschlossene Regelkreise verwirklicht werden können.

Vorzugsweise ist weiterhin vorgesehen, dass der Antriebsmotor derart angesteuert wird, dass die Drehzahl des ersten Antriebselements und/oder des zweiten Antriebselements unabhängig von dem auf die zumindest eine Abtriebswelle übertragene Moment einstellbar ist. Dies kann insbesondere im Zusammenhang mit Helikoptern erforderlich sein, damit beispielsweise die Drehzahl des Hauptrotors nicht abnimmt, wenn ein größeres Moment auf den Heckrotor übertragen wird, um beispielsweise eine Drehung des Helikopters um die Hauptrotorachse zu vermeiden oder hervorzurufen.

Jeder Bausatz, der zur Herstellung einer Kupplung, insbesondere zur Verbindung eines Rotors eines Ultraleichtmodellhelikopters, gemäß einer Ausführungsform der Erfindung geeignet ist, fällt in den Schutzbereich der zugehörigen Ansprüche.

### Zeichnung

Die Erfindung wird nachfolgend anhand der zugehörigen Zeichnung noch näher erläutert.

Es zeigt:

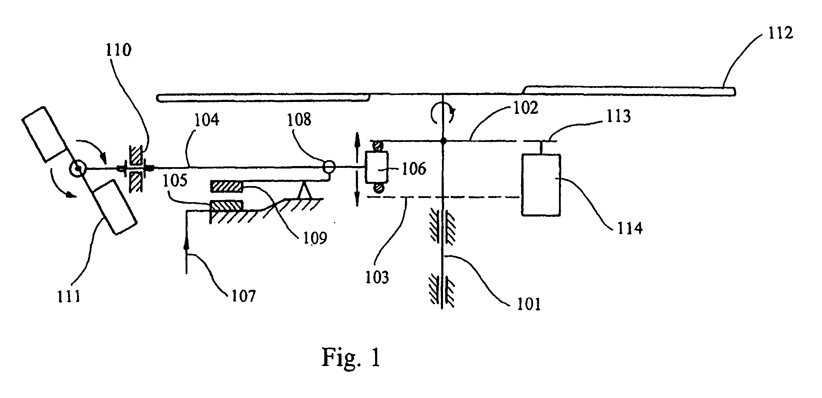

- Figur 1: eine Seitenansicht einer Ausführungsform der erfindungsgemäßen Kupplung zum Antrieb eines Heckrotors;

### Beschreibung des Ausführungsbeispiels

Die folgende Beschreibung des Ausführungsbeispiels erfolgt beispielhaft für einen Ultraleichtmodellhelikopter.

Figur 1 zeigt eine Seitenansicht einer Ausführungsform der erfindungsgemäßen Kupplung zum Antrieb eines Heckrotors. Der in Figur 1 dargestellte Heckrotorantrieb basiert auf dem Prinzip der elektromechanischen Kupplung. Dabei wird die Kraft von einem Elektromotor 114 über das aus den Zahnrädern 113 und 102 bestehende Getriebe auf die Hauptrotorwelle 101 und damit auf den Hauptrotor 112 übertragen. Das auf der Hauptrotorwelle 101 angebrachte, an seiner Unterseite ebene Zahnrad 102 dient als Lauffläche für ein axial an der elastischen Heckrotorwelle 104 angebrachtes Laufrad 106. Die vom Zahnrad 102 auf das Laufrad 106 übertragene Leistung kann reguliert werden, indem die Andruckkraft über den über die Spule 105 und den Permanentmagneten 109 betriebenen Hebel 108 durch unterschiedlich lange Stromimpulse 107 variiert wird. Dabei erfolgt die Rückstellung des Laufrades 106 nach jedem Impuls durch die Rückstellkraft der elastischen Heckrotorwelle 104. Durch ein genügend weit vom Laufrad 106 angebrachtes Festlager 110 der Heckrotorwelle 104, können die elastischen Rückstellkräfte so eingestellt werden, dass einerseits genügend Kraft als Rückstellkraft zur Verfügung steht, um das Laufrad 106 wieder in die Ursprungsposition zu überführen, andererseits die Rückstellkraft jedoch klein genug gehalten werden kann, um von der Hebelvorrichtung überwunden zu werden. Optional besteht noch die Möglichkeit der Schubumkehr des Heckrotors 111, indem ein zweites Laufrad 103 an die Hauptrotorwelle 101 angebracht wird, so dass das Laufrad 106 je nach Impulsfolge entweder durch das obere Zahn- beziehungsweise Laufrad 102 oder das untere Laufrad 103 angetrieben wird oder in einer inaktiven Mittelstellung verharrt.

## Patentansprüche

1. Kupplung, zur Verbindung eines Rotors (111) eines Ultraleichtmodellhelikopters mit einem Antriebsmotor, mit einem ersten Antriebselement (102), das von dem Antriebsmotor (114) in Rotation versetzt werden kann, und mit zumindest einer Abtriebswelle (104), auf die ein von dem Antriebsmotor (114) geliefertes Antriebsmoment zumindest teilweise übertragen werden kann, **dadurch gekennzeichnet,**
- **dass** eine Momentenübertragung auf die zumindest eine Abtriebswelle (104) über ein Laufrad (106) erfolgt,
- **dass** eine Stellvorrichtung (107, 109) auf das Laufrad (106) eine variierbare Kraft (F) ausübt, um das Laufrad (106) gegebenenfalls gegen das erste Antriebselement (102) zu drücken, und
- **dass** die Kraft (F) über ein Magnetfeld variiert wird, das durch die elektrische Ansteuerung von zumindest einer Spule (105) beeinflussbar ist, die Bestandteil der Stellvorrichtung (105, 109) ist.

2. Kupplung nach Anspruch 1, **dadurch gekennzeichnet, dass** die Stellvorrichtung (105, 109) weiterhin ein magnetisierbares Element (109) aufweist, das in kraftschlüssiger Verbindung mit dem Laufrad (106) steht.

3. Kupplung nach einem der vorhergehenden Ansprüche, **dadurch gekennzeichnet, dass** das magnetisierbare Element (109) durch einen Permanentmagneten (109) und/oder eine weitere Spule gebildet ist.

4. Kupplung nach einem der vorhergehenden Ansprüche, **dadurch gekennzeichnet, dass** die kraftschlüssige Verbindung zwischen dem Laufrad (102) und dem magnetisierbaren Element (109) über einen Hebel (108) erfolgt.

5. Kupplung nach einem der vorhergehenden Ansprüche, **dadurch gekennzeichnet, dass** das Laufrad ohne elektrische Ansteuerung der Spule (105) eine Ruhestellung einnimmt, in der keine Momentenübertragung stattfindet.

6. Kupplung nach einem der vorhergehenden Ansprüche, **dadurch gekennzeichnet, dass** die Abtriebswelle (104) elastisch biegbar ist.

7. Kupplung nach einem der vorhergehenden Ansprüche, **dadurch gekennzeichnet, dass** die Abtriebswelle (104) eine Ruhestellung des Laufrades (102) vorgibt.

8. Kupplung nach einem der vorhergehenden Ansprüche, **dadurch gekennzeichnet, dass** das erste Antriebselement (102) auf einer Welle (101) angeordnet ist, und dass auf der Welle (101) ein zweites Antriebselement (103) angeordnet ist, gegen das das Laufrad (102) ebenfalls mit einer variierbaren Kraft gedrückt werden kann, um die Abtriebswelle (104) mit entgegengesetzter Drehrichtung anzutreiben.

9. Kupplung nach einem der vorhergehenden Ansprüche, **dadurch gekennzeichnet, dass** die Verbindung zwischen Laufrad (106) und einem ersten Antriebselement (102) beziehungsweise einem zweiten Antriebselement (103) reibschlüssig erfolgt.

10. Kupplung nach einem der vorhergehenden Ansprüche, **dadurch gekennzeichnet, dass** die Welle (101) eine Hauptrotorwelle (101) ist, die einen Hauptrotor (112) antreibt.

11. Kupplung nach einem der vorhergehenden Ansprüche, **dadurch gekennzeichnet, dass** die Abtriebswelle (104) mit einem Rotor (111) in Verbindung steht.

12. Kupplung nach einem der vorhergehenden Ansprüche, **dadurch gekennzeichnet, dass** der Rotor (111) ein Heckrotor (111) ist.

13. Kupplung nach einem der vorhergehenden Ansprüche, **dadurch gekennzeichnet, dass** die Abtriebswelle (104) im Bereich des Rotors (111) durch ein Lager (110) gelagert ist.

14. Kupplung nach einem der vorhergehenden Ansprüche, **dadurch gekennzeichnet, dass** zumindest eine weitere Abtriebswelle vorgesehen ist, die wie die zumindest eine Abtriebswelle (104) angetrieben wird.

15. Kupplung nach einem der vorhergehenden Ansprüche, **dadurch gekennzeichnet, dass** die Momentenübertragung auf die weitere Abtriebswelle unabhängig von der Momentenübertragung auf die zumindest eine Abtriebswelle (104) variierbar ist.

16. Kupplung nach einem der vorhergehenden Ansprüche, **dadurch gekennzeichnet, dass** das erste Antriebselement (102) und/oder das zweite Antriebselement (103) eine Außenverzahnung aufweist, die in ein auf der Antriebsmotorabtriebswelle angeordnetes Zahnrad (113) eingreift, um das erste Antriebselement (102) und/oder das zweite Antriebselement (103) in Rotation zu versetzen.

17. Kupplung nach einem der vorhergehenden Ansprüche, **dadurch gekennzeichnet, dass** die elektrische Ansteuerung der zumindest einen Spule (105) impulsförmig erfolgt.

18. Kupplung nach einem der vorhergehenden Ansprüche, **dadurch gekennzeichnet, dass** die elektrische Ansteuerung der zumindest einen Spule (105) volldigital erfolgt.

19. Kupplung nach einem der vorhergehenden Ansprüche, **dadurch gekennzeichnet, dass** die elektrische Ansteuerung der zumindest einen Spule (105) in Abhängigkeit von Signalen erfolgt, die von einem Gyro-System geliefert werden.

20. Kupplung nach einem der vorhergehenden Ansprüche, **dadurch gekennzeichnet, dass** die elektrische Ansteuerung der zumindest einen Spule (105) in Abhängigkeit von der Drehzahl der Abtriebswelle (104) und/oder in Abhängigkeit von dem auf die Abtriebswelle (104) übertragenen Moment erfolgt.

21. Kupplung nach einem der vorhergehenden Ansprüche, **dadurch gekennzeichnet, dass** der Antriebsmotor (114) derart angesteuert wird, dass die Drehzahl des ersten Antriebselements (102) und/oder des zweiten Antriebselements (103) unabhängig von dem auf die zumindest eine Abtriebswelle (104) übertragenen Moment einstellbar ist.

22. Bausatz zur Herstellung einer Kupplung, insbesondere zur Verbindung eines Rotors eines Ultraleichtmodellhelikopters, nach einem der vorhergehenden Ansprüche.

## Claims

1. Coupling for connecting a rotor (111) of an ultra-light model helicopter to a drive motor, including a first drive member (102) being able to be caused to rotate by the drive motor (114), and including at least one output shaft (104) to which a drive moment provided by the drive motor (114) can be transmitted at least partially, **characterized in**
- **that** a moment transmission to the at least one output shaft (104) is effected via an impeller (106),
- **that** an actuator (107, 109) exerts a variable force (F) to the impeller (106) to press the impeller (106) optionally against the first drive member (102), and
- **that** the force (F) is varied via a magnetic field being affectable by the electrical drive of at least one coil (105), which is a component of the actuator (105, 109).

2. Coupling according to claim 1, **characterized in that** the actuator (105, 109) further has a magnetizable element (109), which is in force-locking connection to the impeller (106).

3. Coupling according to any one of the preceding claims, **characterized in that** the magnetizable element (109) is formed by a permanent magnet (109) and/or a further coil.

4. Coupling according to any one of the preceding claims, **characterized in that** the force-locking connection between the impeller (102) and the magnetizable element (109) is effected via a lever (108).

5. Coupling according to any one of the preceding claims, **characterized in that** the impeller occupies a rest position without electrical drive of the coil (105), in which no moment transmission occurs.

6. Coupling according to any one of the preceding claims, **characterized in that** the output shaft (104) is resiliently flexible.

7. Coupling according to any one of the preceding claims, **characterized in that** the output shaft (104) presets a rest position of the impeller (102).

8. Coupling according to any one of the preceding claims, **characterized in that** the first drive member (102) is disposed on a shaft (101), and that a second drive member (103) is disposed on the shaft (101), against which the impeller (102) can also be pressed with a variable force to drive the output shaft (104) with opposite rotational direction.

9. Coupling according to any one of the preceding claims, **characterized in that** the connection between the impeller (106) and a first drive member (102) or a second drive member (103), respectively, is effected frictionally.

10. Coupling according to any one of the preceding claims, **characterized in that** the shaft (101) is a main rotor shaft (101) driving a main rotor (112).

11. Coupling according to any one of the preceding claims, **characterized in that** the output shaft (104) is connected to a rotor (111).

12. Coupling according to any one of the preceding claims, **characterized in that** the rotor (111) is a tail rotor (111).

13. Coupling according to any one of the preceding claims, **characterized in that** the output shaft (104) is supported by a bearing (110) in the region of the rotor (111).

14. Coupling according to any one of the preceding claims, **characterized in that** at least one further output shaft is provided, which is driven as the at least one output shaft (104).

15. Coupling according to any one of the preceding claims, **characterized in that** the moment transmission to the further output shaft is variable independently of the moment transmission to the at least one output shaft (104).

16. Coupling according to any one of the preceding claims, **characterized in that** the first drive member (102) and/or the second drive member (103) has an outer toothing engaging a gear (113) disposed on the drive motor output shaft to cause the first drive member (102) and/or the second drive member (103) to rotate.

17. Coupling according to any one of the preceding claims, **characterized in that** the electrical drive of the at least one coil (105) is effected pulse-shaped.

18. Coupling according to any one of the preceding claims, **characterized in that** the electrical drive of the at least one coil (105) is effected fully-digitally.

19. Coupling according to any one of the preceding claims, **characterized in that** the electrical drive of the at least one coil (105) is effected depending on signals provided by a gyro system.

20. Coupling according to any one of the preceding claims, **characterized in that** the electrical drive of the at least one coil (105) is effected depending on the rotational speed of the output shaft (104) and/or depending on the moment transmitted to the output shaft (104).

21. Coupling according to any one of the preceding claims, **characterized in that** the drive motor (114) is driven such that the rotational speed of the first drive member (102) and/or the second drive member (103) is adjustable independently of the moment transmitted to the at least one output shaft (104).

22. Construction kit for manufacturing a coupling, especially for connecting a rotor of an ultra-light model helicopter according to any one of the preceding claims.

## Revendications

1. Accouplement pour accoupler un rotor (111) d'un hélicoptère modèle ultra-léger à un moteur d'entraînement, comportant un premier élément d'entraînement (102) susceptible d'être mis en rotation par le moteur d'entraînement (114) et au moins un arbre de sortie (104) sur lequel un moment d'entraînement créé par le moteur d'entraînement (114) peut être transmis au moins en partie, **caractérisé en ce**
**qu'**une transmission du moment sur l'au moins un arbre de sortie (104) est réalisée à l'aide d'un rotor (106),
**qu'**un organe de réglage (107, 109) exerce une force variable (P) sur la roue mobile (106) afin d'appliquer, le cas échéant, la roue mobile (106) contre le premier élément d'entraînement (102) et en ce
**que** la force (F) est variée à l'aide d'un champ magnétique susceptible d'être influencée grâce à l'amorçage d'au moins une bobine (105) faisant, elle, partie de l'organe de réglage (105, 109).

2. Accouplement selon la revendication 1, **caractérisé en ce que** l'organe de réglage (105, 109) comprend par ailleurs un élément magnétisable (109) en connexion par friction avec la roue mobile (106).

3. Accouplement selon l'une des revendications précédentes, **caractérisé en ce que** l'élément magnétisable (109) est constitué par un aimant permanent (109) et/ou une bobine supplémentaire.

4. Accouplement selon l'une des revendications précédentes, **caractérisé en ce que** la connexion par friction entre la roue mobile (102) et l'élément magnétisable (109) est réalisée à l'aide d'un levier (108).

5. Accouplement selon l'une des revendications précédentes, **caractérisé en ce que** sans amorçage électrique de la bobine (105), la roue mobile prend une position de repos dans laquelle il n'y a pas de transmission de moment.

6. Accouplement selon l'une des revendications précédentes, **caractérisé en ce que** l'arbre de sortie (104) est souple en flexion.

7. Accouplement selon l'une des revendications précédentes, **caractérisé en ce que** l'arbre de sortie (104) définit une position de repos de la roue mobile (102).

8. Accouplement selon l'une des revendications précédentes, **caractérisé en ce que** le premier élément d'entraînement (102) est disposé sur un arbre (101) et **en ce qu'**un deuxième élément d'entraînement (103) est disposé sur l'arbre (101) contre lequel la roue mobile (102) peut également être plaquée avec une force variable afin d'entraîner l'arbre de sortie (104) dans le sens de rotation opposé.

9. Accouplement selon l'une des revendications précédentes, **caractérisé en ce que** la connexion entre la roue mobile (106) et un premier élément d'entraînement (102) respectivement un deuxième élément d'entraînement (103) est réalisée par friction.

10. Accouplement selon l'une des revendications précédentes, **caractérisé en ce que** l'arbre (101) est un arbre principial de rotor (101) entraînant un rotor principal (112).

11. Accouplement selon l'une des revendications précédentes, **caractérisé en ce que** l'arbre de sortie (104) est en communication avec un rotor (111).

12. Accouplement selon l'une des revendications précédentes, **caractérisé en ce que** le rotor (111 ) est un rotor arrière (111).

13. Accouplement selon l'une des revendications précédentes, **caractérisé en ce que** l'arbre de sortie (104) est logé au droit du rotor (111) à l'aide d'un palier (110).

14. Accouplement selon l'une des revendications précédentes, **caractérisé en ce qu'**au moins un deuxième arbre de sortie est prévu, entraîné, lui, de la même manière que l'au moins un arbre de sortie (104).

15. Accouplement selon l'une des revendications précédentes, **caractérisé en ce que** la transmission du moment sur l'arbre de sortie supplémentaire est variable, nonobstant la transmission du moment sur l'au moins un arbre de sortie (104).

16. Accouplement selon l'une des revendications précédentes, **caractérisé en ce que** le premier élément d'entraînement (102) et/ou le deuxième élément d'entraînement (103) présente(nt) une denture extérieure dans laquelle prend une roue dentée (113) prévue sur l'arbre de sortie du moteur d'entraînement afin d'entraîner en rotation le premier élément d'entraînement (102) et/ou le deuxième élément d'entraînement (103).

17. Accouplement selon l'une des revendications précédentes, **caractérisé en ce que** l'amorçage électrique de l'au moins une bobine (105) se fait sous forme d'impulsion.

18. Accouplement selon l'une des revendications précédentes, **caractérisé en ce que** l'amorçage électrique de l'au moins une bobine (105) se fait de manière entièrement numérique.

19. Accouplement selon l'une des revendications précédentes, **caractérisé en ce que** l'amorçage électrique de l'au moins une bobine (105) se fait en fonction de signaux fournis par un gyrosystème.

20. Accouplement selon l'une des revendications précédentes, **caractérisé en ce que** l'amorçage électrique de l'au moins une bobine (105) se fait en fonction de la vitesse de l'arbre de sortie (104) et/ou en fonction du moment transmis sur l'arbre de sortie (104).

21. Accouplement selon l'une des revendications précédentes, **caractérisé en ce que** le moteur d'entraînement (114) est amorcé de manière que la vitesse du premier élément d'entraînement (102) et/ou du deuxième élément d'entraînement (103) est réglable quel que soit le moment transmis sur l'au moins un arbre de sortie (104).

22. Kit de montage pour réaliser un accouplement, notamment pour l'assemblage du rotor d'un hélicoptère modèle ultra-léger selon l'une des revendications précécentes.
